# EUROPÄISCHE PATENTSCHRIFT

(11) **EP 1 190 903 B1**
(45) Veröffentlichungstag und Bekanntmachung des Hinweises auf die Patenterteilung: **23.05.2007**
(21) Anmeldenummer: 01122411.0
(22) Anmeldetag: 20.09.2001
(51) Int. Cl.: B60Q 3/02

(54) **Leseleuchte für einen Fahrzeuginnenraum**
Interior reading light for vehicle
Lampe de lecture pour intérieur de véhicule

(30) Priorität: 20.09.2000 DE 10046843
(43) Veröffentlichungstag der Anmeldung: 27.03.2002
(73) Patentinhaber: Goodrich Corporation, Charlotte, North Carolina 28217-3022 (US)
(72) Erfinder: Becker, Stefan, Dipl.-Ing., 59590 Geseke (DE); Hessling von Heimendahl, Andre, Dipl.-Ing., 59555 Lippstadt (DE); Schulz, Rico, Dipl.-Ing., 59555 Lippstadt (DE)
(74) Vertreter: Hilleringmann, Jochen

(56) Entgegenhaltungen:
- EP-A- 0 513 907
- DE-A- 2 507 857

## Beschreibung

Die Erfindung betrifft eine Leseleuchte für einen Fahrzeuginnenraum mit einer in einem Leuchtengehäuse angeordneten Lichtquelle und mit mindestens einem einen Leselichtkegel erzeugenden optischen Element.

Aus der DE 25 07 857 A1 ist eine Leseleuchte bzw. eine Sitzplatzbeleuchtung für Fahrzeuge bekannt, die ein Leuchtengehäuse aufweist, das im Wesentlichen aus einem kugelförmigen Leuchtenkörper besteht, der verschwenkbar in einer Aufnahme des Leuchtengehäuses gelagert ist. Der Leuchtenkörper weist eine Lichtquelle in Form einer Glühlampe auf, die von einem Reflektor umgeben ist. In Abstrahlrichtung ist der Lichtquelle eine Linse vorgelagert, die eine Gehäuseöffnung im Leuchtenkörper abdeckt.

Nachteilig bei den bekannten Leseleuchten ist, dass beim Hineinsehen in die Leuchte - beispielsweise beim Verschwenken der Leuchte - das grelle weisse Licht der Lichtquelle sichtbar wird, was als unangenehm empfunden wird.

Aufgabe der vorliegenden Erfindung ist es daher, die bekannte Leseleuchte so zu verbessern, dass das Hineinsehen in die Leuchte als weniger unangenehme empfunden wird.

Diese Aufgabe wird erfindungsgemäß in Verbindung mit dem Oberbegriff des Anspruches 1 dadurch gelöst, dass im Leuchtengehäuse ein Reflektorsystem vorgesehen ist, in das über einen Farbfilter Licht so einkoppelbar ist, dass konzentrisch zum Leselichtkegel ein farbiges Licht erzeugt wird.

Beim Hineinsehen in die Leseleuchte wird das farbige Licht sichtbar. Das emmitierte Licht bzw. der Leselichtkegel wird von dem farbigen Licht nicht beeinflusst, da das Reflektorsystem nicht zur Beleuchtung dient, sondern nur dazu, den kleinen Lichtpunkt der Lichtquelle zu vergrößern bzw. eine Umfeldaufhellung zu erzeugen. Dies führt zu einem angenehmeren Effekt beim Hineinsehen in die Leseleuchte.

Gemäß einer bevorzugten Ausführungsform der Erfindung ist zur Erzeugung des Leselichtkegels der Lichtquelle in Abstrahlrichtung eine erste Linse und in einem Abstand eine zweite Linse vorgelagert. Die Lichtquelle ist dabei als eine Leuchtdiode ausgebildet, die klares weisses Licht erzeugt. Der Farbfilter ist als ein der Lichtquelle in Abstrahlrichtung vorgelagerter Filterring ausgebildet.

Durch die Ausbildung des Farbfilters als der Leuchtdiode vorgelagerter Filterring wird der Leselichtkegel nicht beeinflusst und das farbige Licht konzentrisch zum Leselichtkegel erzeugt.

Nach einer weiteren bevorzugten Ausführungsform der Erfindung weist das Reflektorsystem einen Reflektor auf, der konzentrisch zu dem Leselichtkegel und konzentrisch zu einem die Linsen aufweisenden Tubus angeordnet ist. Dadurch, dass der Reflektor konzentrisch zu dem die Linsen aufweisenden Tubus angeordnet ist, wird der Leselichtkegel nicht von dem farbigen Licht beeinflusst.

Gemäß einer weiteren bevorzugten Ausführungsform der Erfindung ist der Filterring als farbiges Kunststoffteil ausgebildet. Es ist aber auch möglich, den Filterring mit einer Filterschicht zu beschichten.

Der Farbfilter ist dabei so ausgebildet, dass er orangefarbenes Licht erzeugt, was als angenehm empfunden wird. Aber auch andere Farben sind möglich und geeignet.

Nach einer weiteren bevorzugten Ausführungsform der Erfindung ist der Farbfilter als Träger für die erste Linse ausgebildet, es ist aber auch möglich, den Farbfilter einstückig mit der Linse zu verbinden.

Gemäß einer weitem bevorzugten Ausführungsform der Erfindung ist der Reflektor aus einem transparenten lichtleitenden Material ausgebildet, so dass das farbige Licht relativ einfach in den Reflektor einzuspiegeln ist.

Grundsätzlich kann der Leselichtkegel durch ein optisches Element erzeugt werden, das als ein die Lichtquelle umgebender Reflektor oder als eine der Lichtquelle vorgelagerte Linse ausgebildet ist. Auch ist es möglich, die Linse mit dem Reflektor zu kombinieren. Insbesondere bei der Verwendung von Leuchtdioden als Lichtquelle wird der Leuchtdiode die erste und zweite Linse zur Erzeugung des Leselichtkegels vorgelagert.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

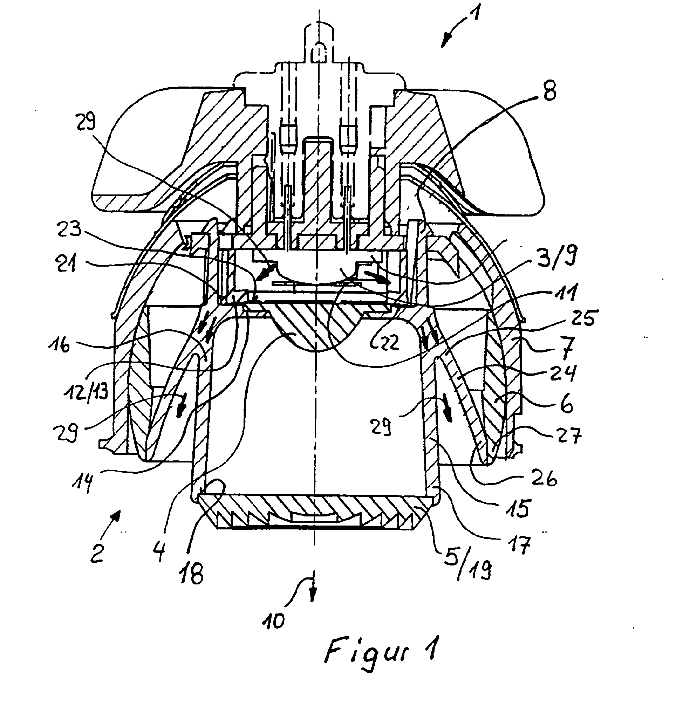

- Figur 1:: Eine Seitenansicht einer Leseleuchte im Schnitt mit einer Fresnellinse als zweiter Linse und

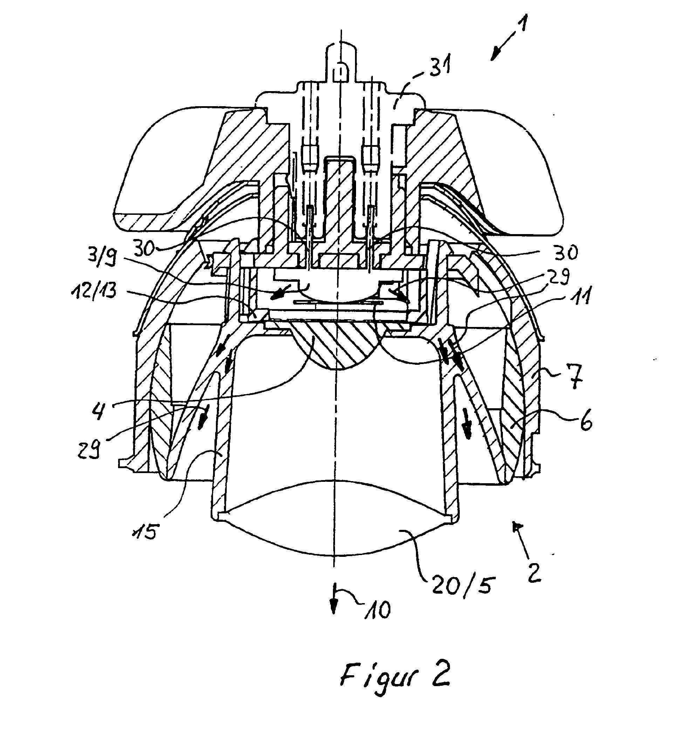

- Figur 2:: eine Seitenansicht einer Leseleuchte im Schnitt mit einer Bikonvexlinse als zweiter Linse.

Eine Leseleuchte 1 besteht im Wesentlichen aus einem Leuchtengehäuse 2, einer Lichtquelle 3, einer ersten Linse 4 und einer zweiten Linse 5.

Das Leuchtengehäuse 2 besteht aus einem kugelförmigen Leuchtenkörper 6, der schwenkbar in einer Schale 7 gehaltert ist.

Der Leuchtenkörper 6 weist an seinem rückwärtigen Ende 8 die Lichtquelle 3 auf, die als Leuchtdiode 9 ausgebildet ist. In Abstrahlrichtung 10 ist der Leuchtdiode 9 eine Blende 11 vorgelagert. Koaxial zur Leuchtdiode 9 ist ein Farbfilter 12 angeordnet, der als Filterring 13 ausgebildet ist. Die erste Linse 4 wird von einer an den Leuchtenkörper 6 angeformten Linsenfassung 14 der Leuchtdiode 9 dem Filterring 13 vorgelagert gehaltert. Die erste Linse 4 ist als Sammellinse, vorzugsweise als Plankonvexlinse mit einer Freiformfläche ausgebildet, deren erster Brennpunkt entgegengesetzt zur Abstrahlrichtung 10 hinter der Leuchtdiode 9 angeordnet ist. Es ist aber auch möglich, die Leuchtdiode 9 bzw. ihre Blende 11 direkt im Brennpunkt der ersten Linse anzuordnen.

Der Leuchtenkörper 6 weist einen Tubus 15 auf, dessen rückwärtiges Ende 16 in die Linsenfassung 14 übergeht und an dessen dem rückwärtigen Ende 16 abgewandten freien Ende 17 der ersten Linse 4 vorgelagert die zweite Linse 5 in einem Absatz 18 gehaltert wird. Nach einem ersten Ausführungsbeispiel ist die zweite Linse 5 als eine Fresnellinse 19 ausgebildet. Nach einem zweiten Ausführungsbeispiel ist die zweite Linse 5 als eine Bikonvexlinse 20 ausgebildet.

Der Farbfilter 12 ist als orangefarbenes Kunststoffteil ausgebildet, das orangefarbenes Licht erzeugt. Der Farbfilter 12 ist konzentrisch zur Leuchtdiode 9 in einem Absatz 21 des Leuchtenkörpers 6 bzw. des Tubus 15 angeordnet und schlägt mit seiner der Leuchtdiode 9 abgewandten Stirnfläche 22 gegen die Leuchtdiodenseitige Planfläche 23 der als Plankonvexlinse ausgebildeten ersten Linse 4 an.

Ein Reflektor 24 ist konzentrisch zu dem die Linsen 4, 5 aufweisenden Tubus 15 angeordnet. Der Reflektor 24 ist mit seinem der Lichtquelle 3 zugewandten rückwärtigen Ende 25 mit dem Tubus 15 verbunden. An seinem dem rückwärtigen Ende 25 abgewandten vorderen Ende 26 ist der Reflektor 24 an der äußeren Kugelwandung 27 des Leuchtenkörper 6 befestigt.

Von der Leuchtdiode 9 ausgehende und seitlich an der Blende 11 vorbeigehende Lichtstrahlen 29 werden von dem Farbfilter 12 bzw. dem Filterring 13 gefiltert und koppeln in den Reflektor 24 bzw. das rückwärtige Ende 16 des Tubus 15 ein und werden beim Hineinsehen in die Leseleuchte 1 als farbige Umfeldaufhellung wahrgenommen.

## Patentansprüche

1. Leseleuchte für einen Fahrzeuginnenraum mit einer in einem Leuchtengehäuse angeordneten Lichtquelle und mit mindestens einem einen Leselichtkegel erzeugenden optischen Element, **dadurch gekennzeichnet, dass** im Leuchtengehäuse (2) ein Reflektorsystem vorgesehen ist, in das über einen Farbfilter (12) Licht (29) so einkoppelbar ist, dass konzentrisch zum Leselichtkegel ein farbiges Licht erzeugt wird.

2. Leseleuchte nach Anspruch 1, **dadurch gekennzeichnet, dass** zur Erzeugung des Leselichtkegels der Lichtquelle (3) in Abstrahlrichtung (10) eine erste Linse (4) und in einem Abstand eine zweite Linse (5) vorgelagert ist und dass die Lichtquelle (3) als eine Leuchtdiode (9) ausgebildet ist.

3. Leseleuchte nach Anspruch 1 oder 2, **dadurch gekennzeichnet, dass** der Farbfilter (12) als ein der Lichtquelle (3) in Abstrahlrichtung (10) vorgelagerter Filterring (13) ausgebildet ist.

4. Leseleuchte nach Anspruch 3, **dadurch gekennzeichnet, dass** der Filterring (13) als farbiges Kunststoffteil ausgebildet ist.

5. Leseleuchte nach Anspruch 3 oder 4, **dadurch gekennzeichnet, dass** der Filterring (13) mit einer Filterschicht beschichtet ist.

6. Leseleuchte nach einem der Ansprüche 1 bis 5, **dadurch gekennzeichnet, dass** der Farbfilter (12) orangefarbenes Licht erzeugt.

7. Leseleuchte nach einem der Ansprüche 2 bis 6, **dadurch gekennzeichnet, dass** der Farbfilter (12) als Träger für die erste Linse (4) ausgebildet ist.

8. Leseleuchte nach einem der Ansprüche 2 bis 6, **dadurch gekennzeichnet, dass** der Farbfilter (12) einstückig mit der Linse (4) verbunden ist.

9. Leseleuchte nach einem der Ansprüche 2 bis 8, **dadurch gekennzeichnet, dass** das Reflektorsystem einen Reflektor (24) aufweist, der konzentrisch zu dem Leselichtkegel und zu einem die Linsen (4, 5) aufweisenden Tubus (15) angeordnet ist.

10. Leseleuchte nach Anspruch 9, **dadurch gekennzeichnet, dass** der Reflektor (24) aus einem transparenten lichtleitenden Material ausgebildet ist.

## Claims

1. A reading lamp for a vehicle interior having a light source arranged in a lamp housing and having at least one optical element which produces a cone of light for reading,
**characterized in that** a reflector system is provided in the lamp housing (2), said reflector system being adapted to have light (29) input thereinto through a colour filter (12) in such a way that coloured light concentric with the cone of the reading lamp is produced.

2. The reading lamp of claim 1, **characterized in that**, to produce the cone of reading light, a first lens (4) and a second lens (5) spaced therefrom are placed in front of the light source (3) in a light-emitting direction (10), and that the light source (3) is structured as a light-emitting diode (9).

3. The reading lamp of claim 1 or 2, **characterized in that** the colour filter (12) is structured as a filter ring (13) placed in front of the light source (3) in the light-emission direction (10).

4. The reading lamp of claim 3, **characterized in that** the filter ring (13) is structured as a coloured plastic part.

5. The reading lamp of claim 3 or 4, **characterized in that** the filter ring (13) is coated with a filter layer.

6. The reading lamp of any one of claims 1 to 5, **characterized in that** the colour filter (12) produces orange-coloured light.

7. The reading lamp of any one of claims 2 to 6, **characterized in that** the colour filter (12) is structured as a carrier for the first lens (4).

8. The reading lamp of any one of claims 2 to 6, **characterized in that** the colour filter (12) is formed as one piece with the lens (4).

9. The reading lamp of any one of claims 2 to 8, **characterized in that** the reflector system comprises a reflector (24) which is concentric with the cone of reading light and with a tube (15) supporting the lenses (4,5).

10. The reading lamp of claim 9, **characterized in that** the reflector (24) is made of a transparent material which conducts light.

## Revendications

1. Lampe de lecture pour intérieur de véhicule comprenant une source lumineuse disposée dans un boîtier d'éclairage et au moins un élément optique générant un cône de lumière de lecture, **caractérisée en ce qu'**est prévu, dans le boîtier d'éclairage (2), un système réflecteur dans lequel, au travers d'un filtre coloré (12), de la lumière (29) peut être couplée de telle façon qu'une lumière de couleur est générée de façon concentrique par rapport au cône de lumière de lecture.

2. Lampe de lecture selon la revendication 1, **caractérisée en ce que**, pour générer le cône de lumière de lecture, est montée en amont de la source lumineuse (3) dans la direction du rayonnement (10) une première lentille (4) et, à distance, une seconde lentille (5), et **en ce que** la source lumineuse (3) est réalisée sous forme de diode lumineuse (9).

3. Lampe de lecture selon la revendication 1 ou 2, **caractérisée en ce que** le filtre coloré (12) est réalisé sous forme d'anneau filtrant (13) monté en amont de la source lumineuse (3) dans la direction du rayonnement (10).

4. Lampe de lecture selon la revendication 3, **caractérisée en ce que** l'anneau filtrant (13) est réalisé sous forme d'élément en matière plastique coloré.

5. Lampe de lecture selon la revendication 3 ou 4, **caractérisée en ce que** l'anneau filtrant (13) est revêtu d'une couche filtrante.

6. Lampe de lecture selon l'une des revendications 1 à 5, **caractérisée en ce que** le filtre coloré (12) produit une lumière de couleur orange.

7. Lampe de lecture selon l'une des revendications 2 à 6, **caractérisée en ce que** le filtre coloré (12) est réalisé en tant que support pour la première lentille (4).

8. Lampe de lecture selon l'une des revendications 2 à 6, **caractérisée en ce que** le filtre coloré (12) est assemblé d'un seul tenant avec la lentille (4).

9. Lampe de lecture selon l'une des revendications 2 à 8, **caractérisée en ce que** le système réflecteur présente un réflecteur (24) disposé concentriquement au cône de lumière de lecture et à un tube (15) comportant les lentilles (4, 5).

10. Lampe de lecture selon la revendication 9, **caractérisée en ce que** le réflecteur (24) est en matériau transparent, conducteur de lumière.
